Europäisches Patentamt

European Patent Office

Office européen des brevets

(19)

(11) **EP 0 775 756 B1**

(12) **FASCICULE DE BREVET EUROPEEN**

(45) Date de publication et mention
de la délivrance du brevet:
**19.12.2001 Bulletin 2001/51**

(51) Int Cl.⁷: **C22C 38/32**

(21) Numéro de dépôt: **96402302.2**

(22) Date de dépôt: **30.10.1996**

(54) **Acier pour la fabrication d'une pièce forgée ayant une structure bainitique et procédé de fabrication d'une pièce**

Stahl für die Herstellung von Schmiedestücken mit bainitischer Struktur, und Herstellungsverfahren dieser Erzeugnisse

Steel for the production of forgings with bainitic structure, and production process of forged parts

(84) Etats contractants désignés:
**AT BE CH DE DK ES FI FR GB GR IE IT LI LU MC NL PT SE**

(30) Priorité: **27.11.1995 FR 9514036**

(43) Date de publication de la demande:
**28.05.1997 Bulletin 1997/22**

(73) Titulaire: **ASCOMETAL (Société anonyme)**
**F-92800 Puteaux (FR)**

(72) Inventeurs:
• **Pichard, Claude**
**57860 Malancourt la Montagne (FR)**
• **Bellus, Jacques**
**57160 SCY-Chazelles (FR)**
• **Pierson, Gilles**
**54920 Villers-la-Montagne (FR)**

(74) Mandataire: **Jacobson, Claude et al**
**Cabinet Lavoix 2, Place d'Estienne d'Orves**
**75441 Paris Cedex 09 (FR)**

(56) Documents cités:
**EP-A- 0 191 873       AT-A- 193 914**
**GB-A- 2 186 594**

**Description**

La présente invention est relative à un acier pour la fabrication de pièces forgées en acier ayant une structure bainitique et des caractéristiques mécaniques élevées.

De nombreuses pièces de mécanique, notamment des pièces pour l'automobile, sont fabriquées par forgeage à chaud de lopins d'acier obtenus par exemple par cisaillage à froid de barres ou de billettes. Après forgeage, les pièces sont refroidies de façon contrôlée jusqu'à la température ambiante pour leur conférer les propriétés mécaniques souhaitées sans qu'un traitement thermique ultérieur soit nécessaire.

Pour fabriquer de telles pièces, il a été proposé, notamment dans le brevet EP 0191873, d'utiliser un acier dont la composition chimique comprend, en poids, de 0,04 % à 0,14 % de carbone, de 0,56 % à 0,99 % de manganèse, de 0,05 % à 0,5 % de silicium, de 1,01 % à 2 % de chrome, jusqu'à 0, 5 % de titane, jusqu'à 0,1 % d'aluminium, jusqu'à 0,015 % de bore et jusqu'à 0,15 % de soufre, le reste étant du fer. Après forgeage, les pièces sont trempées à l'eau.

Cette technique présente plusieurs inconvénients, d'une part parce que la coulabilité de l'acier n'est pas très bonne, notamment en coulée continue, ce qui rend la fabrication des billettes difficile, d'autre part parce que la santé interne des demi produits est parfois mauvaise, en particulier lorsque l'acier est resulfuré pour améliorer son usinabilité. De plus, parfois, la résistance à la traction obtenue n'est pas suffisante. Par exemple, une teneur en carbone trop faible n'assure pas une trempabilité suffisante pour obtenir les caractéristiques mécaniques de traction souhaitées. De même, une teneur en manganèse trop faible conduit à des caractéristiques mécaniques de traction trop basses: un acier contenant 0,05% de carbone, 0,8% de manganèse, 1,1% de chrome, du bore, de l'aluminium et du titane ne permet pas de dépasser 690 MPa pour $Rp_{0,2}$ et 830 MPa pour Rm. Pour toutes ces raisons, la fiabilité des fabrications de pièces forgées réalisées avec cet acier n'est pas satisfaisante.

Le but de la présente invention est de remédier à ces inconvénients en proposant un acier et un procédé de fabrication de pièces forgées qui permette d'obtenir une bonne fiabilité de la fabrication des pièces forgées ayant des caractéristiques de traction et de résilience élevées.

A cet effet, l'invention a pour objet un acier pour la fabrication de pièces forgées ayant une structure bainitique et dont les caractéristiques mécaniques sont, à 20°C:

$$Rp_{0,2} \geq 800 \text{ Mpa}$$

$$Rm \geq 1000 \text{ Mpa}$$

$$Kcu \geq 50 \text{ J/Cm}^2$$

la composition chimique de l'acier comprenant, en poids:

$$0,05 \% \leq C \leq 0,12 \%$$

$$0,1 \% \leq Si \leq 0,45 \%$$

$$1,01 \% \leq Mn \leq 1,8\%$$

$$0,15 \% \leq Cr \leq 1,15 \%$$

$$0,06\% \leq Mo \leq 0,12\%$$

$$Cu \leq 0,30 \%$$

$$Ni \leq 0,30 \%$$

$$0,01 \% \leq Ti \leq 0,04 \%$$

$$0,005 \% \leq Al \leq 0,04 \%$$

$$0,006 \% \leq N \leq 0,013 \%$$

$$0,0005 \% \leq B \leq 0,004 \%$$

$$P \leq 0,025 \%$$

$$0,02 \% \leq S \leq 0,1 \%$$

$$0 \% \leq Pb \leq 0,1 \%$$

$$0 \% \leq Te \leq 0,07 \%$$

éventuellement de 0,0002 % à 0,002 % de calcium, le reste étant du fer et des impuretés résultant de l'élaboration, cette composition chimique satisfaisant en outre la relation:

$$0,2 \% \leq Ni + Mo + Cu \leq 0,7 \%$$

la teneur en bore non combiné n'étant pas inférieure à 0,0005% au dessus de 950°C.

De préférence, la composition chimique de l'acier est telle que:

$$0,05\ \% \leq C \leq 0,08\ \%$$

$$0,15\ \% \leq Si \leq 0,35\ \%$$

$$1,01\ \% \leq Mn \leq 1,35\%$$

$$0,8\ \% \leq Cr \leq 1,15\ \%$$

$$0,08\% \leq Mo \leq 0,11\ \%$$

L'invention concerne également un procédé de fabrication d'une pièce forgée selon le quel:

- on approvisionne un lopin en un acier conforme à l'invention,
- on chauffe le lopin jusqu'à une température de réchauffage T1 comprise entre 1000°C et 1320°C et on le forge, le forgeage se terminant à une température T2, la température de réchauffage T1 étant choisie pour que, à la température T2, la teneur en bore non combiné Bnc soit supérieure ou égale à 0,0005 %,
- on refroidit la pièce directement après forgeage jusqu'à la température ambiante de telle sorte que la vitesse moyenne de refroidissement de la pièce entre la température T2 et 100°C soit supérieure à 14 °C/s et de préférence inférieure à 250 °C/s.

L'invention concerne, enfin, une pièce forgée constituée d'un acier conforme à l'invention, ayant une structure bainitique, et dont les caractéristiques mécaniques sont, à 20°C:

$$Rp_{0,2} \geq 800\ Mpa$$

$$Rm \geq 1000\ Mpa$$

$$Kcu \geq 50\ J/Cm^2$$

De préférence, la pièce a un diamètre équivalent inférieur ou égal à 55 mm.

L'invention va maintenant être décrite de façon plus complète, mais non limitative.

Pour fabriquer des pièces forgées à structure bainitique ayant un diamètre équivalent de préférence inférieur à 55 mm, on utilise un acier dont la composition chimique comprend, en poids:

- de 0,05 % à 0,012 %, et de préférence de 0,05% à 0,08% de carbone pour obtenir une structure bainitique à bas carbone ayant les caractéristiques mécaniques de traction et de résilience requises;
- de 0,1 % à 0,45 %, et de préférence de 0,15% à 0,35% de silicium pour obtenir une désoxydation suffisante sans trop durcir la ferrite à l'état brut de laminage;
- de 1,01 % à 1,8 % de manganèse, et de préférence de 1,01 % à 1,35 % pour obtenir une bonne coulabilité et une bonne santé interne, notamment lorsque du soufre est ajouté pour améliorer l'usinabilité, et pour augmenter la trempabilité;
- de 0,15 % à 1,15 %, et de préférence de 0,8% à 1.15 %, de chrome pour augmenter la trempabilité sans trop durcir la ferrite à l'état brut de laminage afin de ne pas détériorer l'aptitude au cisaillage à froid;
- de 0,06 % à 0,12 %, et de préférence de 0,08% à 0,11% de molybdène pour améliorer la trempabilité en synergie avec le bore, moins de 0,3 % de nickel et moins de 0,3% de cuivre; la somme des teneurs en nickel, cuivre et molybdène doit être supérieure à 0,2 % pour obtenir une trempabilité suffisante, et inférieure à 0,7% pour éviter la formation de martensite après forgeage;
- de 0,01 % à 0,04 % de titane, de 0,005 % à 0,04 % d'aluminium, de 0,006 % à 0,013 % d'azote et de 0,0005 % à 0,004 % de bore pour obtenir, en combinaison avec les autres éléments trempants, la trempabilité requise;
- moins de 0,025 % de phosphore pour ne pas détériorer la résilience;
- de 0,02 % à 0,1 % de soufre, éventuellement jusqu'à 0,07 % de tellure, éventuellement jusqu'à 0,1 % de plomb, et, éventuellement, entre 0,0002 % et 0,002% de calcium pour obtenir une bonne usinabilité;

le reste étant du fer et des impuretés résultant de l'élaboration.

Afin d'obtenir le plein effet du bore sur la trempabilité, les teneurs en bore, titane, aluminium et azote sont ajustées de telle façon que la teneur en bore non combiné Bnc soit supérieure à 0,0005% dès que la température T est supérieure ou égale à 950°C.

L'acier liquide est élaboré par affinage en poche chauffante sous vide ou par affinage en poche chauffante suivi d'un traitement sous vide, puis coulé soit en coulée continu sous forme de billettes, soit en lingots. Lorsque l'acier est coulé en lingots, les lingots sont laminés à chaud sous forme de billettes ou de barres rondes qu'on laisse refroidir à l'air calme. Lorsque l'acier est coulé en continue, les blooms de coulée continue sont laminés à chaud sous forme de billette ou de barres rondes, également.

Les billettes ou les barres rondes sont découpées, par cisaillage à froid, pour obtenir des lopins qui seront forgés à chaud.

Pour fabriquer une pièce, on chauffe un lopin jusqu'à une température T1 comprise entre 1000°C et 1320°C pour obtenir une structure austénitique homogène, puis on effectue le forgeage qui se termine à une température T2, et on refroidit la pièce jusqu'à la température ambiante à une vitesse de refroidissement moyenne entre T2 et 100°C, à une vitesse supérieure à 14 °C/s et, de préférence, inférieure à 250 °C/s. La température T1 doit être choisie de telle façon que, compte tenu des conditions de forgeage, la température de fin de forgeage T2 soit telle que, en fin de forgeage, la teneur en bore non combiné, Bnc, soit supérieure à 0,0005 %.

On obtient ainsi, notamment pour des pièces dont le diamètre équivalent est inférieur à 55 mm, une structure bainitique dans toute la masse, dont les caractéristiques mécaniques sont, à 20°C:

$$Rp_{0,2} \geq 800 \text{ MPa}$$

$$Rm \geq 1000 \text{ Mpa}$$

$$Kcu \geq 50 \text{ J/Cm}^2$$

Le diamètre équivalent d'une pièce, est le diamètre d'une barre ronde dont la vitesse de refroidissement à coeur est égal à la vitesse de refroidissement de la pièce, lors du refroidissement de celle-ci après forgeage.

Selon le diamètre équivalent de la pièce, le refroidissement après forgeage peut être fait à l'air soufflé, au brouillard, à l'huile, à l'eau ou par tout autre moyen qui permet de satisfaire les conditions de refroidissement imposées.

A titre d'exemple, on a fabriqué un arbre mécanique de forme généralement cylindrique dont le diamètre équivalent était de 30 mm. Pour fabriquer cet arbre, on a utilisé un acier élaboré en poche chauffante sous vide, dont la composition chimique, en poids, était:

$$C = 0,08 \%$$

$$Si = 0,40 \%$$

$$Mn = 1,30 \%$$

$$Cr = 0,92 \%$$

$$Mo = 0,1 \%$$

$$Cu = 0,22 \%$$

$$Ni = 0,095 \%$$

$$Ti = 0,023 \%$$

$$Al = 0,032 \%$$

$$N = 0,0075 \%$$

$$B = 0,0028 \%$$

$$P = 0,015\%$$

$$S = 0,072 \%$$

le reste étant du fer et des impuretés résultant de l'élaboration

Les lopins ont été chauffés avant forgeage à la température de 1280°C et forgés pour fabriquer des arbres dont le diamètre équivalent était de 30mm. La température de fin de forgeage était de 1050°C. A cette température, la teneur en bore non combiné de l'acier était de 0,0021%. Après forgeage, les arbres on été refroidis à l'eau à 20°C avec agitation, ce qui a conduit à une vitesse moyenne de refroidissement à coeur de 36°C/s entre 1050°C et 100°C, et à l'obtention d'une structure bainitique dont les caractéristiques mécaniques à 20°C étaient:

$$Rp_{0,2} = 896 \text{ Mpa}$$

$$Rm = 1116 \text{ Mpa}$$

$$Kcu = 84 \text{ J/Cm}^2$$

L'acier a été coulé sans difficultés et les demi produits ne présentaient pas de défauts de santé interne malgré une forte teneur en soufre ajoutée pour obtenir une bonne usinabilité.

## Revendications

1. Acier pour la fabrication de pièces forgées ayant une structure bainitique et dont les caractéristiques mécaniques sont, à 20°C:

$$Rp_{0,2} \geq 800 \text{ Mpa}$$

$$Rm \geq 1000 \text{ Mpa}$$

$$Kcu \geq 50 \text{ J/Cm}^2$$

**caractérisé en ce que** sa composition chimique comprend, en poids:

$$0,05 \% \leq C \leq 0,12 \%$$

$$0,1 \% \leq Si \leq 0,45 \%$$

$$1,01 \% \leq Mn \leq 1,8 \%$$

$$0,15 \% \leq Cr \leq 1,15 \%$$

$$0,06 \% \leq Mo \leq 0,12 \%$$

$$Cu \leq 0,30 \%$$

$$Ni \leq 0,30 \%$$

$$0,01 \% \leq Ti \leq 0,04 \%$$

$$0,005 \% \leq Al \leq 0,04 \%$$

$$0,006 \% \leq N \leq 0,013 \%$$

$$0,0005 \% \leq B \leq 0,004 \%$$

$$P \leq 0,025 \%$$

$$0,02 \% \leq S \leq 0,1 \%$$

$$0 \% \leq Pb \leq 0,1 \%$$

$$0 \% \leq Te \leq 0,07 \%$$

éventuellement de 0,0002 % à 0,002 % de calcium, le reste étant du fer et des impuretés résultant de l'élaboration, la composition chimique satisfaisant en outre la relation:

$$0,2 \% \leq Ni + Mo + Cu \leq 0,7 \%$$

la teneur en bore non combiné n'étant pas inférieure à 0,0005% au dessus de 950°C.

2. Acier selon la revendication 1 **caractérisé en ce que** la composition chimique est telle que:

$$0,05 \% \leq C \leq 0,08 \%$$

$$0,15\% \leq Si \leq 0,35\%$$

$$1,01 \% \leq Mn \leq 1,35\%$$

$$0,8 \% \leq Cr \leq 1,15\%$$

$$0,08\% \leq Mo \leq 0,11 \%$$

3. Procédé de fabrication d'une pièce forgée **caractérisé en ce que**:

   - on approvisionne un lopin en un acier conforme à la revendication 1 ou à la revendication 2,
   - on chauffe le lopin jusqu'à une température de réchauffage T1 comprise entre 1000°C et 1320°C et on le forge, le forgeage se terminant à une température T2, la température de réchauffage T1 étant choisie pour que, à la température T2, la teneur en bore non combiné Bnc soit supérieure ou égale à 0,0005 %,
   - on refroidit la pièce directement après forgeage jusqu'à la température ambiante de telle sorte que, en tous points de la pièce, la vitesse moyenne de refroidissement entre la température T2 et 100°C soit supérieure à 14 °C/s et de préférence inférieure à 250 °C/s.

4. Pièce forgée **caractérisée en ce qu'**elle est constituée en un acier selon la revendication 1 ou la revendication 2, **en ce qu'**elle a une structure bainitique, et **en ce que** ses caractéristiques mécaniques sont, à 20°C:

$$Rp_{0,2} \geq 800\ Mpa$$

$$Rm \geq 1000\ Mpa$$

$$Kcu \geq 50\ J/Cm^2$$

5. Pièce selon la revendication 4 **caractérisée en ce que** son diamètre équivalent est inférieur ou égal à 55 mm.

**Patentansprüche**

1. Stahl für die Herstellung von Schmiedestücken mit bainitischer Struktur, dessen mechanische Charakteristiken bei 20°C sind:

$$Rp0,2 \geq 800\ Mpa$$

$$Rm \geq 1000\ Mpa$$

$$Kcu \geq 50\ J/Cm^2$$

**dadurch gekennzeichnet, dass** seine chemische Zusammensetzung (als Gewicht) umfasst:

$$0,05\ \% \leq C \leq 0,12\ \%$$

$$0,1\ \% \leq Si \leq 0,45\ \%$$

$$1,01\ \% \leq Mn \leq 1,8\ \%$$

$$0,15\ \% \leq Cr \leq 1,15\ \%$$

$$0,06\ \% \leq Mo \leq 0,12\ \%$$

$$Cu \leq 0,30\%$$

$$Ni \leq 0,30\ \%$$

$$0,01\ \% \leq Ti \leq 0,04\ \%$$

$$0,005\ \% \leq Al \leq 0,04\ \%$$

$$0,006\ \% \leq N \leq 0,013\%$$

$$0,0005\ \% \leq B \leq 0,004\ \%$$

$$P \leq 0,025\ \%$$

$$0,02\ \% \leq S \leq 0,1\ \%$$

$$0\ \% \leq Pb \leq 0,1\ \%$$

$$0\ \% \leq Te \leq 0,07\ \%,$$

ggfs. 0,0002 % bis 0,002 % Kalzium, der Rest Eisen ist und Verunreinigungen, die von der Verarbeitung herrühren, wobei die chemische Zusammensetzung darüber hinaus die Beziehung

$$0,2\ \% \leq Ni + Mo + Cu \leq 0,7\ \%$$

erfüllt, und der Gehalt an nicht gebundenem Bor oberhalb von 950°C nicht unterhalb von 0,0005 % liegt.

2. Stahl nach Anspruch 1, **dadurch gekennzeichnet, dass** seine chemische Zusammensetzung wie folgt ist:

$$0,05\ \% \leq C \leq 0,08\ \%$$

$$0,15\ \% \leq Si \leq 0,35\ \%$$

$$1,01\ \% \leq Mn \leq 1,35\ \%$$

$$0,8\ \% \leq Cr \leq 1,15\ \%$$

$$0,08\ \% \leq Mo \leq 0,11\ \%$$

3. Verfahren zur Herstellung eines geschmiedeten Stückes, **dadurch gekennzeichnet, dass** man einen Rohling aus einem Stahl gemäß Anspruch 1 oder Anspruch 2 bereitstellt, man den Rohling bis auf eine Vorwärmtemperatur T1 erhitzt, die zwischen 1000°C und 1320°C liegt, und man ihn schmiedet, das Schmieden bei einer Temperatur T2 endet, wobei die Temperatur T1 der Vorwärmung so gewählt ist, dass bei der Temperatur T2 der Gehalt an nicht gebundenem Bor Bnc oberhalb oder gleich 0,0005 % ist,
man das Stück direkt nach dem Schmieden abkühlt auf eine Umgebungstemperatur auf eine Weise, dass an allen Stellen des Teiles die mittlere Geschwindigkeit der Abkühlung zwischen der Temperatur T2 und 100°C oberhalb von 14° C/s und vorzugsweise unterhalb von 150° C/s liegt.

4. Schmiedestück, **dadurch gekennzeichnet, dass** es aus einem Stahl nach Anspruch 1 oder Anspruch 2 besteht, in dem es eine bainitische Struktur gibt, und dessen mechanische Eigenschaften bei 20°C wie folgt sind:

$$Rp0,2 \geq 800 \text{ Mpa}$$

$$Rm \geq 1000 \text{ Mpa}$$

$$Kcu \geq 50 \text{ J/Cm}^2$$

5. Schmiedestück nach Anspruch 4, **dadurch gekennzeichnet, dass** sein äquivalenter Durchmesser kleiner oder gleich 55 mm ist.

**Claims**

1. Steel for the manufacture of forged parts having a bainitic structure and having the following mechanical characteristics at 20°C:

$$Rp_{0.2} \geq 800 \text{ Mpa}$$

$$Rm \geq 1000 \text{ Mpa}$$

$$Kcu \geq 50 \text{ J/Cm}^2$$

**characterised in that** its chemical composition by weight is:

$$0.05 \% \leq C \leq 0.12 \%$$

$$0.1 \% \leq Si \leq 0.45 \%$$

$$1.01 \% \leq Mn \leq 1.8 \%$$

$$0.15 \% \leq Cr \leq 1.15 \%$$

$$0.06 \% \leq Mo \leq 0.12 \%$$

$$Cu \leq 0.30 \%$$

$$Ni \leq 0.30, \%$$

$$0.01 \% \leq Ti \leq 0.04 \%$$

$$0.005 \% \leq Al \leq 0.04 \%$$

$$0.006 \% \leq N \leq 0.013 \%$$

$$0.0005 \% \leq B \leq 0.004 \%$$

$$P \leq 0.025 \%$$

$$0.02 \% \leq S \leq 0.1 \%$$

$$0 \% \leq Pb \leq 0.1 \%$$

$$0 \% \leq Te \leq 0.07 \%$$

and optionally 0.0002.% to 0.002 % of calcium, the remainder being iron and impurities resulting from the production process, the chemical composition further satisfying the equation:

$$0.2 \% \leq Ni + Mo + Cu \leq 0.7 \%$$

the content of uncombined boron being not less than 0.0005% above 950°C.

2. Steel according to claim 1 **characterised in that** the chemical composition is such that:

$$0.05 \% \leq C \leq 0.08 \%$$

$$0.15 \% \leq Si \leq 0.35 \%$$

$$1.01 \% \leq Mn \leq 1.35 \%$$

$$0.8 \% \leq Cr \leq 1.15 \%$$

$$0.08 \% \leq Mo \leq 0.11 \%$$

3.  Process for producing a forged part, **characterised in that**:

    -   a billet of a steel according to claim 1 or claim 2 is provided,
    -   the billet is heated to a reheating temperature T1 of between 1000°C and 1320°C and is forged, the forging ending at a temperature T2, the reheating temperature T1 being selected so that, at the temperature T2, the content of uncombined boron Bnc is greater than or equal to 0.0005 %,
    -   directly after forging, the part is cooled to ambient temperature so that, at every point on the part, the average rate of cooling between temperature T2 and 100°C is greater than 14°C/s and preferably less than 250°C/s.

4.  Forged part, **characterised in that** it consists of a steel according to claim 1 or claim 2, **in that** it has a bainitic structure and **in that** its mechanical characteristics at 20°C are as follows:

$$Rp_{0.2} \geq 800 \; Mpa$$

$$Rm \geq 1000 \; Mpa$$

$$Kcu \geq 50 \; J/Cm^2$$

5.  Part according to claim 4, **characterised in that** its equivalent diameter is less than or equal to 55 mm.